# EUROPEAN PATENT SPECIFICATION

(11) **EP 0 550 706 B1**
(45) Date of publication and mention of the grant of the patent: **11.09.1996**
(21) Application number: 92910270.5
(22) Date of filing: 18.05.1992
(51) Int. Cl.: B60S 1/48, H02K 5/00, H02K 5/24

(54) **IMPULSING PUMP FOR DISPENSING CLEANING LIQUID FOR MOTOR VEHICLES**
REINIGUNGSFLÜSSIGKEITSDRUCKPUMPE FÜR KRAFTFAHRZEUGE
POMPE A IMPULSION DE LIQUIDE NETTOYANT POUR VEHICULES AUTOMOBILES

(30) Priority: 28.05.1991 ES 9101285
(43) Date of publication of application: 14.07.1993
(73) Proprietor: FICO TRANSPAR, S.A., E-08191 Rubi (ES)
(72) Inventor: MORA GALVAN, Manuel, E-08921 Santa Coloma de Gramanet (ES)
(74) Representative: Sugranes Moliné, Pedro
(86) International application number: ES9200039
(87) International publication number: WO9221538

(56) References cited:
- FR-A- 2 000 411
- FR-A- 2 462 594
- Patent Abstracts of Japan, vol. 4, num. 185 (E-38), 19 Diciembre 1980; & JP, A, 55127853 (MATSUSHITA ELECTRIC WORKS LTD) 3 Octubre 1980
- Patent Abstracts of Japan, vol. 7, num. 233 (E-204)[1378], 15 Octubre 1983; & JP, A, 58123344 (KIYUUSHIYUU HITACHI MAKUSERU K.K.) 27 Julio 1983
- Patent Abstracts of Japan, vol. 9, num. 240 (E-345)[1963], 26 Septiembre 1985; & JP, A, 6091838 (NIPPON DENSO K.K.) 23 Mayo 1985

## Description

### Field of the Invention

The object of the present invention is a cleaning liquid pump for automobiles which, in particular, is applicable to automobiles having devices for cleaning the front and/or rear glazed surfaces.

### Background of the Invention

As is widely known, the devices for cleaning the above mentioned glazed surfaces, generally the windscreen, the rear screen and even the headlamps, of the automobile are provided in general with a pump driven by an electric motor which is for drawing cleaning liquid from an auxiliary reservoir provided for the purpose and pumping it towards said glazed surfaces where it is sprayed at a rate and with a pressure required by each particular application.

The known embodiments of cleaning liquid pump comprise, in summary, a multipiece shell housing a cleaning liquid suction and discharge impeller driven, through a sealing bushing, by a d.c. motor provided with terminals projecting outwardly from said shell for connexion to the line supplied by the automobile battery.

The said multipiece shell, which is generally basically cylindrical in shape, is formed internally in the centre portion thereof with a housing and, at one of the ends thereof, with a cleaning liquid pumping chamber. The electric drive motor for the suction-discharge impeller is housed in the housing and the suction-discharge impeller which is directly coupled to the electric motor shaft is housed in the pumping chamber.

The housing in which the suction-discharge impeller electric drive motor is housed is generally isolated from the pumping chamber by a sealing bushing through which, as said above, the electric motor shaft and the suction-discharge impeller are coupled together.

The main purpose of the sealing bushing is to limit and even to prevent the ingress of cleaning liquid in the electric motor housing with a view to avoiding the operating defects and faults which would otherwise occur in the electric motor for the very nature of the cleaning liquid, formed basically by water and, frequently, a complementary additive.

Generally speaking, in the known cleaning liquid pumps, the noise level attained during operation is very high, frequently reaching levels of around 80 dB. This noise level, in the majority of cases, may be clearly heard from inside the automobile passenger compartment, in view of the high levels of sound-proofing reached in such compartments.

As an example of known embodiments of cleaning liquid pumps for automobiles, there may be cited Spanish utility model ES-U-244 882 (equivalent to French patent FR-A-2462594) which incorporates, further to the novel items characterizing it, all the common members described in the foregoing paragraphs.

French patent document FR-A-2000411 discloses a method by which an electronic motor (in general) can be attached to a tube surronding it. Said tube is a ventilation or refrigeration tube. So, the main problem solved according to this document is how to attach the motor to the tube without interrumping the flow of fluid inside the tube, and not to insulate the motor from a casing. The solution given to the flow problem according to this reference is to leave some openings allowing the passage of fluid which will be used for refrigeration or ventilation and which advantageously will be used to refrigerate the motor.

In connection with the invention reference is also made to Japanese patent document JP-A-127853/80 in which it is described a system to solve the problem of transmission of mechanical vibrations from the electric engine to the casing in the field of electric hand-tools. For this purpose a plurality of flexible elastic bodies having caves are interposed between an outer circumference of the driver and a inner circumference of the body case, and the driver is supported in the case. So this document intents to solve a different problem and employs different solutions.

### Summary of the Invention

With a view to providing a new embodiment of cleaning liquid pump which, with regard to the known embodiments, substantially reduces the noise level reached during the operation thereof, there is disclosed a cleaning liquid pump for automobiles of novel structure.

The cleaning liquid pump for automobiles of the invention comprises the following working members:
- an essentially cylindrical multipiece shell formed: at one end thereof, with an axial tubular extension for suction of the cleaning liquid having at the free end thereof transverse suction notches, with a pumping chamber in communication with said tubular extension and which houses the pump suction-discharge impeller and with a discharge nozzle, tangentially connected to the pumping chamber, through which the cleaning liquid pumped by the suction-discharge impeller is discharged; in the mid portion thereof, with a housing for the electric motor driving the cleaning liquid suction-discharge impeller and the sealing bushing separating said housing from the pumping chamber; and, at the other end thereof, with a cavity for receiving the connexion terminal(s) of the electric motor to the supply;
- a suction-discharge impeller provided with a plurality of equidistantly spaced apart blades or vanes and an axial suction extension, the length of which is in functional correspondence with the length of the axial extension formed on one of the ends of the shell, the suction-discharge impeller also having means for firm coupling to the electric drive motor shaft;
- a sealing bushing through which the electric motor shaft is coupled to the suction-discharge impeller;
- and a d.c. electric motor provided with a casing and which is connected to the supply by terminals extending outwardly through the multipiece shell;
and it is characterized in that:
- the housing defined by the multipiece shell for containing the suction-discharge impeller electric drive motor has on the inner surface thereof regularly spaced apart narrow longitudinal retaining ribs which extend practically coextensively with said housing forming a single piece with the housing with which they are conformed, said ribs being built of a massive material whose rigidity allows them to compress the casing of the electric motor and lock it relative to the said multipiece shell.

In accordance with a further characteristic and novel construction of the pump of the invention, it comprises the same working members as referred to in the preambles of claims 1 and 2 and of the type disclosed in ES-U-244 882 above and is characterized in that:
- the housing defined by the multipiece shell for containing the suction-discharge impeller electric drive motor has on the inner surface thereof regularly spaced apart narrow longitudinal retaining ribs which extend practically coextensively with said housing forming a single piece with the housing with which they are conformed, said ribs being built of a massive material whose rigidity allows them to compress the outer surface of a tubular sleeve made from soft material surrounding the casing of the electric motor, said material being arranged between said casing and said retaining ribs.

The above described features of the cleaning liquid pump of the invention provide a solution to the problems derived from the noise generated by the operation of the known pump embodiments, which noise is essentially produced by the vibrations of the electric motor located in the housing provided for such purpose in the pump shell.

In fact, the retaining ribs provided in the interior of the casing housing in which the electric motor is housed compress the casing of said motor which, in this way, is locked in place and has slight possibilities of vibrating and consequently generating noise for this reason.

In certain cases, for convenience of assembly or any other similar reason derived from the configuration and/or dimensions of the electric motor casing, the compression on the electric motor casing is applied through a tubular sleeve of soft material arranged between the retaining ribs and the said casing so that the retaining ribs compress the said tubular sleeve and casing whereby, as described in the immediately foregoing paragraph, the electric motor is locked in place and has very slight possibilities of vibrating and, consequently, of generating noise for this reason, with an added member formed by the said tubular sleeve which increases the effect of cancelling out the vibrations in comparison with the first described embodiment.

### Brief Description of the Drawings

The cleaning liquid pump for automobiles of the invention is illustrated in the sheet of drawings accompanying the description. In the drawings:
Figure 1 is a partial section view showing one embodiment B1 of the pump of the invention;
Figure 2 is a view on the line II-II of Figure 1;
Figure 3 is a partial section view showing another embodiment B2 of the pump of the invention.
Figure 4 is a view on the line IV-IV of Figure 3.

### Detailed Description of the Embodiment

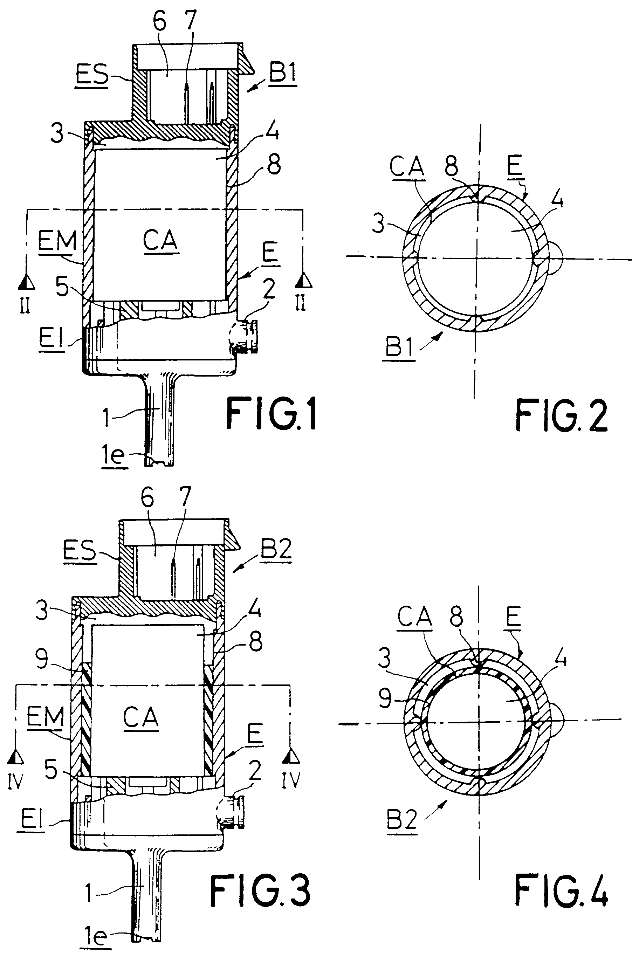

The pumps B1 and B2 for the cleaning liquid for automobiles of the invention comprise, as shown in Figures 1 and 3, the multipiece shell E which is essentially cylindrical and houses the remaining components of the pumps B1 and B2.

Figures 1 and 3 show how the multipiece shell E is formed at the lower end EI thereof with the axial tubular extension 1 provided at the end thereof with notches 1e through which the cleaning liquid contained in the corresponding auxiliary reservoir provided therefor and not shown in the drawings is aspirated, said aspiration being effected by the suction-discharge impeller housed in the pumping chamber arranged in the region of said lower end EI of the multipiece shell E. For greater clarity of description neither the suction-discharge impeller nor the pumping chamber containing it have been shown in the drawings. It is understood that these not shown members have no direct relationship with the invention and, therefore, may have any structure and operation.

The multipiece shell E is also formed at the lower end EI thereof with the tubular extension 2, shown in Figures 1 and 3, which is connected tangentially to the said pumping chamber. As is usual, there is connected to said tubular extension 2 a pumping nozzle which is in turn connected to the piping distributing the cleaning liquid pumped by the pump to the points of use. Said pumping nozzle has not been shown in the drawings for the same reasons as those given above and obviously it may have any form which is positionally and functionally appropriate for each particular application.

Figures 1 and 4 show how the multipiece shell E is formed in the intermediate portion EM thereof with the tubular housing 3 where the electric drive motor 4 for the suction-discharge impeller is housed.

The electric motor 4 is coupled to the suction-discharge impeller by means of the sealing bushing 5 which is shown in Figures 1 and 3. As stated above, the main purpose of this sealing bushing 5 is to prevent the cleaning liquid from penetrating in the portion of the housing 3 containing the electric motor 4 since, otherwise, the ingress of cleaning liquid in said housing may cause breakdown and/or misfunctioning of the pump.

Figures 1 and 3 show how the multipiece shell E is formed at the upper end ES thereof with the cavity 6 where the connection terminals 7 connecting with the electric motor 4 by means of electrical conductor means are housed. Said cavity 6 is for receiving the connectors which connect the electric motor 4 to the system supplied by the automobile battery via the connection terminals 7.

Figures 1 to 4 show how the housing 3 defined by the multipiece shell E is provided on the inner surface thereof with narrow longitudinal retaining ribs 8 which are regularly spaced apart and are, preferably, coextensive with said housing 3. In these embodiments, the longitudinal retaining ribs 8 are four in number, although both the number and the spacing thereof may vary depending on the needs of each particular application.

Up to here, all the members described are common and are found in the pumps B1 and B2 corresponding to the two examples illustrated in the drawings and for this reason they have been identified in all cases with identical reference symbols. Hereinafter, the description will specially differentiate the two embodiments: the example B1 (Figures 1 and 2) and example B2 (Figures 3 and 4).

Figures 1 and 2 relate to the pump embodiment B1 according to which the longitudinal retaining ribs 8 formed in the interior of the housing 3 of the multipiece shell E press directly on the outer surface of the casing CA of the electric motor 4 which is in this way locked in place relative to the multipiece shell E. Under these conditions, when the pump B1 is running, the vibrations of the electric motor 4 are substantially reduced and, consequently, the generation of noise thereby is highly attenuated.

Figures 3 and 4 relate to the other pump embodiment B2, according to which there is a tubular sleeve 9 snugly wrapping the electric motor 4 lodged in the housing 3 of the multipiece shell E, over a length which does not affect the correct operation thereof under normal conditions of use and, particularly with regard to the operating temperature. In this way, the longitudinal retaining ribs 8 press on the said tubular sleeve 9 and this presses in turn against the outer surface of the casing CA of the electric motor 4 which is firmly locked in place relative to the multipiece shell E. When the pump of the invention is running, the electric motor 4 surrounded by the tubular sleeve 9 and squeezed by the narrow ribs 8 is subject to an intensive, effective absorption of vibrations and, therewith, to a very substantial noise reduction.

In the tests carried out by the inventor, there is obtained as a result of the action of the longitudinal retaining ribs 8 on the electric motor 4, according to Figures 1 and 2 (example B1) and, of the longitudinal retaining ribs and of the sleeve 9 according to Figures 3 and 4 (example B2), a very notable reduction of the sound level reached by the pump of the invention over the known pump embodiments. In fact, the sound level reached by the pump of the invention under normal working conditions is around 60 dB, whereas in general, under the same working conditions, the known pump embodiments reach average sound levels of around 80 dB while running.

In this way, the low sound level reached during operation by the cleaning liquid pump of the invention is practically imperceptible from the inside of the automobile passenger compartment, a traditional and long-standing source of annoyance being removed thereby.

## Claims

1. A cleaning liquid pump for automobiles comprising the following working members:
- an essentially cylindrical multipiece shell (E) formed: at one end (EI) thereof, with an axial tubular (1) extension for suction of the cleaning liquid provided at the free end thereof with transverse suction notches (1e), with a pumping chamber in communication with said tubular extension (1) and which houses the pump suction-discharge impeller and with a discharge nozzle, tangentially connected to the pumping chamber, through which the cleaning liquid pumped by the suction-discharge impeller is discharged; in the mid portion (EM) thereof, with a housing (3) for the electric motor (4) driving the cleaning liquid suction-discharge impeller and the sealing bushing (5) separating said housing (3) from the pumping chamber; and, at the other end (ES) thereof, with a cavity (6) for receiving the connexion terminal(s) of the electric motor (4) to the supply;
- a suction-discharge impeller provided with a plurality of equidistantly spaced apart blades or vanes and an axial suction extension, the length of which is in functional correspondence with the length of the axial extension (1) formed on one of the ends (EI) of the shell (3), the suction-discharge impeller also having means for firm coupling to the electric drive motor (4) shaft;
- a sealing bushing (5) through which the electric motor (4) shaft is coupled to the suction-discharge impeller;
- and a d.c. electric motor (4) provided with a casing (CA) and which is connected to the supply by terminals (7) extending to the outside through the multipiece shell (E);
and it is characterized in that:
- the housing (3) defined by the multipiece shell (E) for containing the suction-discharge impeller electric drive motor (4) has on the inner surface thereof regularly spaced apart narrow longitudinal retaining ribs (8) which extend practically coextensively with said housing (3), forming a single piece with the housing with which they are conformed, said ribs being built of a massive material whose rigidity allows them to compress the casing (CA) of the electric motor (4), locking it in place relative to said multipiece shell (E).

2. A cleaning liquid pump for automobiles comprising the following working members:
- an essentially cylindrical multipiece shell (E) formed: at one end (EI) thereof, with an axial tubular extension (1) for suction of the cleaning liquid provided at the free end thereof with transverse suction notches (1e), with a pumping chamber in communication with said tubular extension (1) and which houses the pump suction-discharge impeller and with a discharge nozzle, tangentially connected to the pumping chamber, through which the cleaning liquid pumped by the suction-discharge impeller is discharged; in the mid portion (EM) thereof, a housing (3) for the electric motor (4) driving the cleaning liquid suction-discharge impeller and the sealing bushing (5) separating said housing (3) from the pumping chamber; and, at the other end (ES) thereof, with a cavity (6) for receiving the connexion terminal(s) of the electric motor (4) to the supply;
- a suction-discharge impeller provided with a plurality of equidistantly spaced apart blades or vanes and an axial suction extension, the length of which is in functional correspondence with the length of the axial extension (1) formed on one of the ends (EI) of the shell (E), the suction-discharge impeller also having means for firm coupling to the electric drive motor (4) shaft;
- a sealing bushing (5) through which the electric motor (4) shaft is coupled to the suction-discharge impeller;
- and a d.c. electric motor (4) provided with a casing (CA) and which is connected to the supply by terminals (7) extending to the outside through the multipiece shell (E);
and it is characterized in that:
- the housing (3) defined by the multipiece shell (E) for containing the suction-discharge impeller electric drive motor (4) has on the inner surface thereof regularly spaced apart narrow longitudinal retaining ribs (8) which extend practically coextensively with said housing (3), forming a single piece with the housing with which they are conformed, said ribs being built of a massive material whose rigidity allows them to compress the outer surface of a tubular sleeve (9) made from soft material surrounding the casing (CA) of the electric motor (4), said material being arranged between said casing (CA) and said retaining ribs (8).

## Patentansprüche

1. Reinigungsflüssigkeitspumpe für Automobile, die folgende Arbeitselemente aufweist:
- eine im wesentlichen zylindrische Ummantelung (E) aus vielen Stücken, die wie folgt ausgebildet ist: an ihrem einem Ende (EI) mit einer axialen, röhrenförmigen Erstreckung (1) zum Saugen der Reinigungsflüssigkeit, die an ihrem freien Ende mit quer verlaufenden Saugeinkerbungen (1e) versehen ist, mit einer Pumpkammer, die sich in Verbindung mit der röhrenförmigen Erstreckung (1) befindet und die das Saug-Ausström-Pumpenflügelrad aufnimmt, und mit einer Ausströmdüse, die tangential mit der Pumpkammer verbunden ist, durch die die Reinigungsflüssigkeit, die durch das Saug-Ausström-Flügelrad gepumpt wird, ausströmt: in ihrem Mittelabschnitt (EM) mit einem Gehäuse (3) für den Elektromotor (4), der das Saug-Ausström-Flügelrad für die Reinigungsflüssigkeit antreibt und einer Abdichthülse (5), die das Gehäuse (3) von der Pumpkammer trennt; und an ihrem anderem Ende (ES) mit einem Hohlraum (6), um die Anschlußklemme(n) des Elektromotors (4) zu der Energieversorgung aufzunehmen;
- ein Saug-Ausström-Flügelrad, das mit einer Anzahl von gleichmäßig beabstandeten Blättern oder Schaufeln versehen ist und eine axiale Saugerstreckung aufweist, deren Länge in funktionaler Übereinstimmung mit der Länge der axialen Erstreckung (1) ist, die an einem der Enden (EI) der Ummantelung (3) ausgebildet ist, wobei das Saug-Ausström-Flügelrad, ebenso Mittel zur festen Kopplung an die Welle des elektrischen Antriebsmotors (4) aufweist;
- eine Abdichthülse (5) durch die die Welle des Elektromotors (4) an das Saug-Ausström-Flügelrad gekoppelt ist;
- und einen Gleichstrom-Elektromotor (4), der mit einem Gehäuse (CA) versehen ist und der mit der Energieversorgung durch Anschlüsse (7) verbunden ist, die sich nach außen durch die Ummantelung (E) aus vielen Stücken erstreckt;
und die dadurch gekennzeichnet ist, daß:
- das Gehäuse (3), das durch die Ummantelung (E) aus vielen Stücken festgelegt ist, um den elektrischen Antriebsmotor (4) für das Saug-Ausström-Flügelrad zu beinhalten, weist an seiner inneren Oberfläche regelmäßig beabstandete, schmale längliche Halterippen (8) auf, die sich praktisch parallel bzw. gemeinsam ausdehnend mit dem Gehäuse (3) erstrecken, wobei sie ein einziges Stück mit dem Gehäuse bilden, an das sie angepaßt sind, wobei die Rippen aus einem massiven Material ausgebildet sind, dessen mechanische Elastitzität bzw. Steifheit es ihnen erlaubt das Gehäuse (CA) des Elektromotors (4) zusammenzudrücken, wodurch es relativ zu der Ummantelung (E) aus vielen Stücken in Lage festgeklemmt bzw. festgelegt wird.

2. Reinigungsflüssigkeitspumpe für Automobile, die folgende Arbeitselemente aufweist:
- eine im wesentlichen zylindrische Ummantelung (E) aus vielen Stücken, die wie folgt ausgebildet ist: an ihrem einem Ende (EI) mit einer axialen, röhrenförmigen Erstreckung (1) zum Saugen der Reinigungsflüssigkeit, die an ihrem freien Ende mit quer verlaufenden Saugeinkerbungen (1e) versehen ist, mit einer Pumpkammer, die sich in Verbindung mit der röhrenförmigen Erstreckung (1) einem massiven Material ausgebildet sind, dessen mechanische Elastitzität bzw. Steifheit es ihnen erlaubt die äußere Oberfläche der röhrenförmigen Hülse (9) zusammenzudrücken, die aus weichem Material hergestellt ist, das das Gehäuse (CA) des Elektromotors (4) umgibt, wobei das Material zwischen dem Gehäuse (CA) und den Halterippen (8) angeordnet ist.

## Revendications

1. Pompe à liquide de nettoyage pour véhicules automobiles, comprenant les éléments opérants suivants :
- une enceinte à éléments multiples (E), de forme essentiellement cylindrique comportant : à l'une de ses extrémités (EI), un prolongement tubulaire axial (1) pour l'aspiration du liquide de nettoyage, lequel est doté, à son extrémité libre, d'entailles d'aspiration transversales (1e) ; une chambre de pompage en communication avec ledit prolongement tubulaire (1) et renfermant le rotor d'aspiration-refoulement ; et une buse de refoulement, raccordée tangentiellement à la chambre de pompage et par laquelle est refoulé le liquide de nettoyage pompé par le rotor d'aspiration-refoulement ; cette enceinte comprenant encore, dans sa portion centrale (EM), un logement (3) pour le moteur électrique (4) assurant l'entraînement du rotor d'aspiration-refoulement du liquide de nettoyage, et le manchon d'étanchéité (5) séparant ledit logement (3) de la chambre de pompage , ladite enceinte comportant, à l'autre de ses extrémités (ES), une cavité (6) destinée à recevoir la(les) borne(s) assurant la connexion du moteur électrique (4) à l'alimentation ;
- un rotor d'aspiration-refoulement comprenant une pluralité d'ailettes ou palettes équidistantes, et un prolongement axial d'aspiration, dont la longueur correspond, fonctionnellement, à celle du prolongement axial (1) prévu à l'une des extrémités libres (EI) de l'enceinte (E), le rotor d'aspiration-refoulement présentant également des moyens mécaniques lui permettant d'être accouplé solidement à l'arbre du moteur électrique d'entraînement (4) ;
- un manchon d'étanchéité (5), par l'intermédiaire duquel l'arbre du moteur électrique (4) est accouplé au rotor d'aspiration-refoulement ;
- et un moteur électrique à courant continu (4) pourvu d'une cage (CA) et raccordé à l'alimentation par des bornes (7) qui ressortent, vers l'extérieur, au-travers de l'enceinte (E) à éléments multiples,
pompe caractérisée en ce que :
- le logement (3) défini par l'enceinte à éléments multiples (E) et renfermant le moteur électrique (4) d'entraînement du rotor d'aspiration-refoulement présente, sur sa surface interne, d'étroites nervures de retenue (8) longitudinales, régulièrement espacées, lesquelles s'étendent pratiquement sur la même longueur que le logement (3) précité, constituant avec ce logement, auquel elles sont conjuguées, un seul élément, lesdites nervures étant fabriquées dans un matériau plein dont la rigidité leur permet de comprimer la cage (CA) du moteur électrique (4) en la calant en position par rapport à ladite enceinte à éléments multiples (E).

2. Pompe à liquide de nettoyage pour véhicules automobiles, comprenant les éléments opérants suivants :
- une enceinte à éléments multiples (E), de forme essentiellement cylindrique comportant : à l'une de ses extrémités (EI), un prolongement tubulaire axial (1) pour l'aspiration du liquide de nettoyage, lequel est doté, à son extrémité libre, d'entailles d'aspiration transversales (1e) ; une chambre de pompage en communication avec ledit prolongement tubulaire (1) et renfermant le rotor d'aspiration-refoulement ; et une buse de refoulement, raccordée tangentiellement à la chambre de pompage et par laquelle est refoulé le liquide de nettoyage pompé par le rotor d'aspiration-refoulement ; cette enceinte comprenant encore, dans sa portion centrale (EM), un logement (3) pour le moteur électrique (4) assurant l'entraînement du rotor d'aspiration-refoulement du liquide de nettoyage, et le manchon d'étanchéité (5) séparant ledit logement (3) de la chambre de pompage ; ladite enceinte comportant, à l'autre de ses extrémités (ES), une cavité (6) destinée à recevoir la(les) borne(s) assurant la connexion du moteur électrique (4) à l'alimentation ;
- un rotor d'aspiration-refoulement comprenant une pluralité d'ailettes ou palettes équidistantes, et un prolongement axial d'aspiration, dont la longueur correspond, fonctionnellement, à celle du prolongement axial (1) prévu à l'une des extrémités libres (EI) de l'enceinte (E), le rotor d'aspiration-refoulement présentant également des moyens mécaniques lui permettant d'être accouplé solidement à l'arbre du moteur électrique d'entraînement (4) ;
- un manchon d'étanchéité (5), par l'intermédiaire duquel l'arbre du moteur électrique (4) est accouplé au rotor d'aspiration-refoulement ;
- et un moteur électrique à courant continu (4) pourvu d'une cage (CA) et raccordé à l'alimentation par des bornes (7) qui ressortent, vers l'extérieur, au-travers de l'enceinte (E) à éléments multiples,
pompe caractérisée en ce que :
- le logement (3) défini par l'enceinte à éléments multiples (E) et renfermant le moteur électrique (4) d'entraînement du rotor d'aspiration-refoulement présente, sur sa surface interne, d'étroites nervures de retenue (8) longitudinales, régulièrement espacées, lesquelles s'étendent pratiquement sur la même longueur que le logement (3) précité, constituant avec ce logement, auquel elles sont conjuguées, un seul élément, lesdites nervures étant fabriquées dans un matériau plein dont la rigidité leur permet de comprimer la surface externe d'une gaine tubulaire (9) fabriquée dans un matériau souple, enveloppant la cage (CA) du moteur électrique (4), le matériau précité étant disposé entre ladite cage (CA) et lesdites nervures de retenue (8).
